# EUROPEAN PATENT SPECIFICATION

(11) **EP 1 735 985 B1**
(45) Date of publication and mention of the grant of the patent: **26.05.2010**
(21) Application number: 05718379.0
(22) Date of filing: 07.04.2005
(51) Int. Cl.: H04L 29/06

(54) **A METHOD, NETWORK ELEMENT AND SYSTEM FOR PROVIDING SECURITY OF A USER SESSION**
EIN VERFAHREN, NETZWERKKOMPONENTE UND SYSTEM ZUR BEREITSTELLUNG SICHEREN NUTZERSITZUNG
PROCEDE, ELEMENT RESEAU ET SYSTEME POUR FOURNIR DE LA SECURITE A UNE SESSION UTILISATEUR

(30) Priority: 15.04.2004 EP 04008979; 15.09.2004 US 940981
(43) Date of publication of application: 27.12.2006
(73) Proprietor: Nokia Corporation, 02150 Espoo (FI)
(72) Inventor: LE, Yanqun, 100013 Beijing (CN); LIU, Qing, 100013 Beijing (CN); FORSBERG, Dan, FIN-00210 Helsinki (FI); LOUGHNEY, John, Palo Alto, CA 94304 (US)
(74) Representative: TBK-Patent
(86) International application number: PCT/IB2005/000908
(87) International publication number: WO 2005/101790

(56) References cited:
- EP-A- 0 909 073
- CALHOUN AIRESPACE P ET AL: "Diameter Base Protocol" IETF STANDARD, INTERNET ENGINEERING TASK FORCE, IETF, CH, September 2003 (2003-09), XP015009370 ISSN: 0000-0003

## Description

### Field of the invention

The present invention relates to a method, network element, and system for providing security of a user session. In particular, the present invention relates to an AAA user session associated with authentication, authorization, and accounting functions in a domain-based network such as the Internet or a 3G mobile communication network.

### Background of the invention

In recent years, communication technology has widely spread in terms of number of users and amount of use of the telecommunication services by the users. This also led to an increase in the number of different technologies and technological concepts in use.

Many existing and future networks like the Internet are organized in a domain-based manner. This means that the whole network is constituted of a plurality of individual administrative areas, which are known as domains or realms. Each such domain covers a relatively small region, but by an inter-connection of many of such domains, the whole network can achieve an enormous coverage in terms of area and users. Additionally, each such domain itself can again be organized in a domain-based manner being constituted of so-called sub-domains. Such a network configuration represents a hierarchical structure and is advantageous for administration and operation of a large amount of users.

The individual domains are built up or established, organized and managed by a respective service provider, and they are organizationally confined and independent but inter-connected with each other.

A popular example for such a domain-based network is the Internet with the Internet service providers (ISP) providing individual inter-connected networks representing the domains. In this context, the term of a user's or user terminal's 'home domain' means the particular domain of the ISP with which a user or user terminal is registered. The well-known address format for Internet communications therefore is *username@homedomain.*

In a domain-based network arrangement as described above, each service provider basically provides for communication or information services for the users registered with him. Today, however, there exist many security relevant and/or user-related services which makes the provision of security aspects such as authentication and authorization mandatory in communication networks. Many future Internet services or mobile communication services will also require such functions. The rules and directives to be followed by users having access to databases, systems and resources can be summarized by the term "security policy". If a user, for example, wants to use a security-relevant service of another service provider, the user has to authenticate and/or authorize himself. For this purpose, he needs a password, a security key or the like. Such information can be managed in a centralized way or by a specialized network or part of a network providing such user-related services.

Additionally, the aforementioned inter-connection of domains enables a user to utilize services of service providers different from his own service provider and also within domains different from his home domain. This feature is often referred to as roaming and makes an additional accounting functionality necessary, for example, in order to gather billing, auditing and reporting information about the "visiting" user.

Conventionally, a specialized network for performing such functions as described above is built up "on top of" the communication network, and is often referred to as AAA (authorization, authentication and accounting) network. The thus realized functions like system access and database look-ups can take place in specific and separate AAA nodes, but in practice, these nodes are often implemented within the nodes of the underlying communication network, which has the advantage of a joint use of hardware and thus reduced costs. Notwithstanding the hardware location, the AAA nodes offer a functionality which is distinct from other functionalities. Therefore, in the following specification a node is individually addressed as long as it provides a distinct functionality irrespective of its physical location or implementation.

For the sake of clarity and simplicity, it will hereinafter only be referred to AAA nodes. The structure of the AAA network is also in line with the underlying communication network like the Internet or a 3GPP network. More specifically, an AAA network servicing a domain-based communication network is also organized in a domain-based manner.

As stated above, various kinds of network access technologies are evolving very fast. As a result, a common AAA framework is needed to help those network access vendors to administer different kinds of local customers or foreign customers.

The use of AAA techniques provides as benefits an increased flexibility and control, scalability, and the usage of standardized authentication methods. However, specialized security and routing protocols are also needed for performing AAA functions properly and for routing respective messages related to AAA functions. Examples for such standardized AAA protocols, which are known to a skilled person, include RADIUS (Remote Access Dial-In User Services) which is standardized by the IETF (Internet Engineering Task Force), TACACS+ (Terminal Access Controller Access System) implemented by Cisco^{®}, and Kerberos. These protocols are used for dial-in and terminal server access to the AAA network mainly from outside the domain. As an example, a user roaming in a domain of another service provider than his own provider has to authenticate himself within this domain. Therefore, he sends a request, possibly together with or like a password, to an AAA node within his home domain for providing him with the required services.

Recently, the AAA Working Group of the Internet Engineering Task Force (IETF) is under way of standardizing a new RADIUS-based AAA protocol called Diameter. Diameter is, hence, proposed by the IETF to solve the above mentioned problems and tasks. Then, different kinds of access technologies can utilize the capability of the Diameter Base Protocol, and send/receive their specific AAA messages within Diameter user sessions for each designated user.

A session can be understood as a service provisioning over time, but may also be a mere concatenation of transactions. Start and stop of a session is determined by a service definition. A session is linked to one or more users and relates to one or more service providers or operators which support the session with resources of some kind. Consequently, an active session can be considered as logical connection between a user or a corresponding user equipment and a service node of a provider's domain. A session has three phases: establishment, service, and teardown. The following description will, however, focus on readily established sessions, i.e. during their service phase, since the establishment and teardown of sessions lie outside the scope of the present invention.

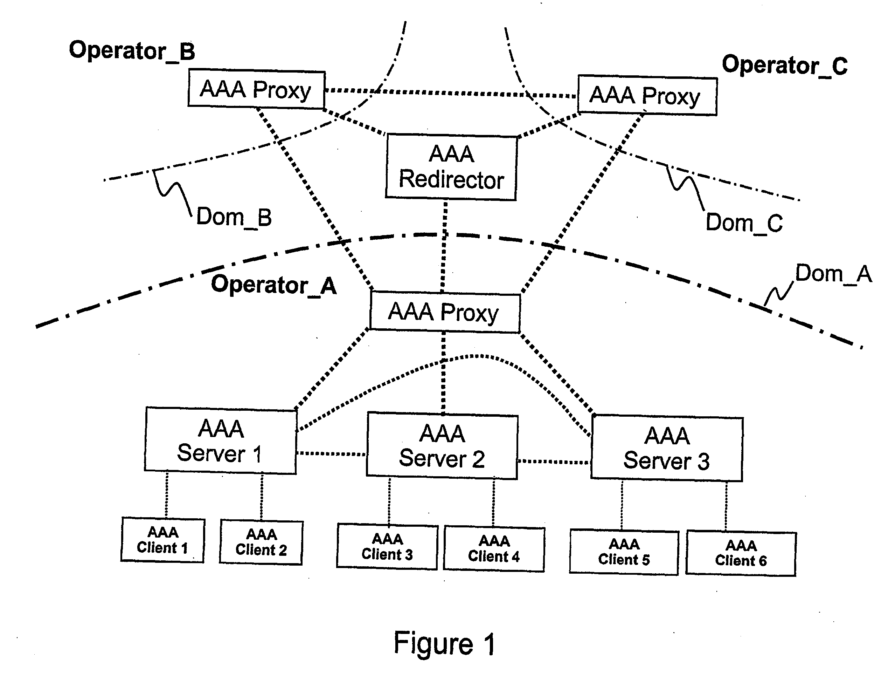

Each session should have a session identifier (session-Id) which allows each provider and user in the session to audit session activity. A session-Id is normally generated as part of an authentication process by the device initiating the session, which in most cases is done by a client node (cf. Fig. 1). It must be globally unique for each provider-user combination to ensure confidentiality and security of that session, i.e. it must not be possible to derive user data from the session-Id.

The Diameter Base protocol provides a session-oriented and policy-based framework for the functionality of Diameter routing of AAA messages being associated with a specific session. It is based on the nowadays commonly used challenge-response-type RADIUS protocol which is located at the network layer of the Open Systems Interconnection (OSI) network model. Diameter dial-up services are, for example, further on based on PPP (Point-to-Point Protocol) connections, but roaming support is enhanced, and the Mobile IP model is integrated, making Diameter the AAA protocol for the future. The terminology defined by the IETF in the version of the RFC3588 (Diameter Base Protocol) which was found on their website at "http://www.ietf.org/rfc/ rfc3588.txt" on April 13, 2004 will form the basis for the terms used in the further specification.

Hitherto, when large amounts of users are administered by a service provider, i.e. within an individual domain, it is reasonable to deploy the AAA network in a hierarchical way. Fig. 1 shows such a hierarchical AAA deployment in a domain-based manner. In the following, the structure and operation of the system according to Fig. 1 will be described. In Fig. 1, the dashed lines represent bidirectional connections between entities being linked by these lines, and the dash-dotted lines indicate the administrative areas, i.e. the boundaries of the domains, operated by a respective service provider.

As can be seen in Fig. 1, a domain-based network generally comprises of a plurality of domains Dom_A, Dom_B, Dom_C, each of which is respectively administered by a separate service provider or operator A, B, C. Although there are three such domains of three service providers shown in Fig. 1, such a network may comprise any number of domains. In between all domains, i.e. not belonging to an administrative sphere of one service provider, there can also exist network nodes. As an example, an AAA redirector is depicted in Fig. 1.

Domains can be expected to have the same basic constitution. Hence, only domain A is described and a similar description of domains B and C is omitted.

Further, the hierarchical structure of an AAA network within a domain of Operator_A is shown in detail in Fig. 1. The highest hierarchy layer consists of an entry node of the domain Dom_A, e.g. an AAA proxy, which serves as an interface between this and other domains. This entry node is, therefore, connected to the AAA redirector between all domains, to entry nodes of other domains, and to nodes of a lower hierarchy layer of Dom_A. In this second hierarchy layer, a plurality of service nodes, e.g. AAA (home) servers are located which provide the above-mentioned user-related services such as AAA services. As can be seen in Fig. 1, these service nodes are connected to each other. In a third hierarchy layer, a plurality of clients or access routers is connected to each respective service node. A user can access the network via these clients or access routers.

Each user registered with Operator_A, i.e. in domain Dom_A, is fixedly associated with one of the plurality of service nodes, e.g. AAA Server 1. The respective service node (also known as 'home server' of this user) manages method lists containing user and service information needed for the operation of the AAA functions related to this user. For example, policy information for authorization like passwords and security keys of a user for a special service is stored in these methods lists.

The above structure also applies to AAA networks in other domains Dom_B, Dom_C, which is indicated by displaying the respective entry nodes.

A transmitting and processing of AAA messages will not be further examined in the following description. For the purpose of illustrating the present invention, it can be assumed that AAA messages being associated to a specific session are transmitted and processed "within" this session according to respective functions.

As regards security of user sessions and particularly user sessions in connection with AAA, there exist problems and drawbacks in practice.

In this connection, Bernard Aboba mentioned a mechanism of Reverse Path Forwarding (RPF) Check in the mailing list of the IETF AAA working group in order to authenticate the Diameter application messages. This method was found in section 4.3 on the website "http://www.ietf.org/intemet-drafts/draft-irtf-aaaarch-handoff-04.txt" on March 15, 2004. However, this is a method to protect RADIUS messages.

The Diameter Cryptographic Message Syntax (CMS) application provides a similar type of protection by encrypting payload of AAA messages. However, such an approach just protects the contents of the messages against eavesdropping, but a processing of messages would not be improved in terms of making a session more secure against attacks from outside.

However, the above mentioned work has now been stopped in the IETF and, thus, there still do not exist any practical measures for protecting AAA user sessions.

Until now, no measures concerning the security of AAA user sessions, and in particular of Diameter user sessions, have been developed. However, there are some attacks conceivable that would cause a legal (Diameter) user session to be interfered by some misbehaved or unfriendly (Diameter) server not being involved in this session. Such an attack may be e.g. a forging or spoofing of the session-Id for hacking a valid session.

Below, here are some examples of the threats which may occur to a user session. First, as regards shared access points for different ISPs, customers accessing a network via or being registered with a certain ISP may experience security deficiencies in their transactions, if no robust/secure user session is provided by this certain ISP. Second, problems regarding roaming users are likewise possible. A roaming user, i.e. a user being located in a domain different of the one where he/she is registered, has to build up a user session from the foreign domain to his/her home domain. Such a session has possibly to be established via networks of third party ISPs like 3G or wireless local area network (WLAN) operators. Without further protection of his/her session, the established user session may rather easily be broken, which would endanger the security and/or integrity of the user's transactions.

However, a use of vendor-specific message fields such as attribute-value-pairs (AVPs) to implement a proprietary end-to-end security mechanism would cause interoperability (IOP) problems and more software implementation and/or maintenance efforts.

As a known solution in the field of the present invention, the document EP-A-0 909 073 discloses methods and an apparatus for a computer network firewall with proxy reflection. It provides improved computer network firewalls which include one or more features for increased processing efficiency. A firewall in accordance with this document can support multiple security policies, multiple users or both, by applying any one of several distinct sets of access rules. The object of document D1 is thus to minimize the need for proxy processes on the firewall. This is achieved by "stateful" packet filtering which involves storing the results of rule processing applied to one or more packets, i.e. by caching rule processing results for one or more packets, and then utilizing the cached results to bypass rule processing for subsequent similar packets. Accordingly, this document, in particular concerning "stateful packet filtering", is directed to an efficient processing of firewall functions in terms of performance utilizing previously obtained knowledge

Thus, a solution to the above problems and drawbacks is needed for providing more secure user sessions.

### Summary of the invention

Consequently, it is an object of the present invention to remove the above drawbacks and to provide an accordingly improved method, network element, and system.

According to a first aspect of the invention, this object is for example achieved by a method, as defined in claim 1, for providing security of a session between a client of a domain of a network and a service node of said network is provided, which network consists of a plurality of domains, from which domain a user connected to said network via said client requests a service; said method comprising the steps of: receiving a message in a network element of said domain, which message is associated with said session and destined for said client; analyzing said message in said network element in terms of routing information contained therein; determining in said network element, whether said routing information admits said message to be forwarded to said client; and discarding of said message in said network element, if said step of determining yields that said message is not admitted to be forwarded to said client; wherein said routing information comprises an origin domain information of said message, which indicates a domain from which said message is expected to originate, and comprises a route information of said message, which indicates from which domain said message actually originates.

According to a second aspect of the invention, this object is for example achieved by a network element, as defined in claim 13, of a domain of a network consisting of a plurality of domains is provided, which provides security of a session between a client of said domain of said network and a service node of said network, from which domain a user connected to said network via said client requests a service; comprising: receiving means for receiving a message which is associated with said session and destined for said client; analyzing means for analyzing said message in terms of routing information contained therein; determining means for determining, whether said routing information admits said message to be forwarded to said client; and message processing means for discarding said message, if said determinator yields that said message is not admitted to be forwarded to said client; wherein said routing information comprises an origin domain information of said message, which indicates a domain from which said message is expected to originate, and comprises a route information of said message, which indicates from which domain said message actually originates.

According to a third aspect of the invention, this object is for example achieved by a system, as defined in claim 19, of a domain of a network consisting of a plurality of domains is provided, which provides security of a session between a client of said domain of said network and a service node of said network, from which domain a user connected to said network via said client requests a service; comprising: a receiver which receives a message which is associated with said session and destined for said client; an analyzer which analyzes said message in terms of routing information contained therein; a determinator which determines, whether said routing information admits said message to be forwarded to said client; and a message processor which discards said message, if said determinator yields that said message is not admitted to be forwarded to said client. The routing information is constituted as described above in connection with the first and second aspects.

According to a fourth aspect of the invention, this object is for example achieved by a computer program, as defined in claim 25, embodied on a computer-readable medium comprising program code configured to operate a network element within a domain of a network consisting of a plurality of domains, which is adapted to provide security of a session between a client of said domain of said network and a service node of said network, from which domain a user connected to said network via said client requests a service, the computer program being configured to perform a method according to the first aspect as described above.

Further developments and advantageous embodiments are set out in the respective dependent claims.

It is an advantage of the present invention that an end-to-end security for user sessions, and particularly to Diameter user sessions, is provided. This also includes an increased security for users and service providers.

With the embodiments of the present invention, a higher security for a Diameter user session is provided, but also slightly slow down the processing of incoming messages in an AAA proxy and/or an AAA server and, therewith, the messages themselves.

It is another advantage of the present invention that valid user sessions can be protected against misbehaved AAA servers.

It is a further advantage of the embodiments of the present invention that two different measures to protect a legal user session against two different kinds of attacks are provided. Additionally, both measures can also be combined in accordance with an embodiment of the present invention.

Further, it is an advantage of the present invention that it can be used in any Diameter based AAA client and AAA server/proxy, or even in similar network nodes which are not necessarily based on Diameter.

Further, it is an advantage of the embodiments of the present invention that several problems according to other conceivable solutions of the problem such as interoperability problems with use of vendor-specific message fields do not occur.

### Brief description of the drawings

In the following, the present invention will be described in greater detail with reference to the accompanying drawings, in which

Fig. 1 shows a hierarchical AAA deployment in a domain-based manner,

Fig. 2 shows a scenario overview of an AAA deployment with an active Diameter user session,

Fig. 3 shows a situation of a first attack to the ongoing Diameter user session in the scenario according to Fig. 2,

Fig. 4 shows a defense scenario against the first attack according to an embodiment of the present invention,

Fig. 5 illustrates a processing of the defense against the first attack according to the embodiment of the present invention,

Fig. 6 shows a situation of a second attack to the ongoing Diameter user session in the scenario according to Fig. 2,

Fig. 7 shows a defense scenario against the second attack according to a comparative example,

Fig. 8 illustrates a processing of the defense against the second attack according to the comparative example,

Fig. 9 shows a defense scenario against the first and second attacks according to a modification of the embodiment of the present invention.

### Detailed description of embodiments of the present invention

It is to be noted that the present invention will be described with a specific focus on the usage of an AAA session and the Diameter Base protocol specified by the IETF AAA Working Group as the underlying AAA protocol. Nevertheless, the present invention is not limited to either of both but is also applicable to other types of sessions to be protected and protocols therefor, e.g. RADIUS, as long as these other protocols are similar to the Diameter Base protocol and support or are compatible to at least the routing functionality offered by Diameter.

A domain-based communication network underneath the AAA deployment concerned can exemplarily be the Internet. However, any other domain-based communication network is also conceivable, such as a 3G mobile communication system.

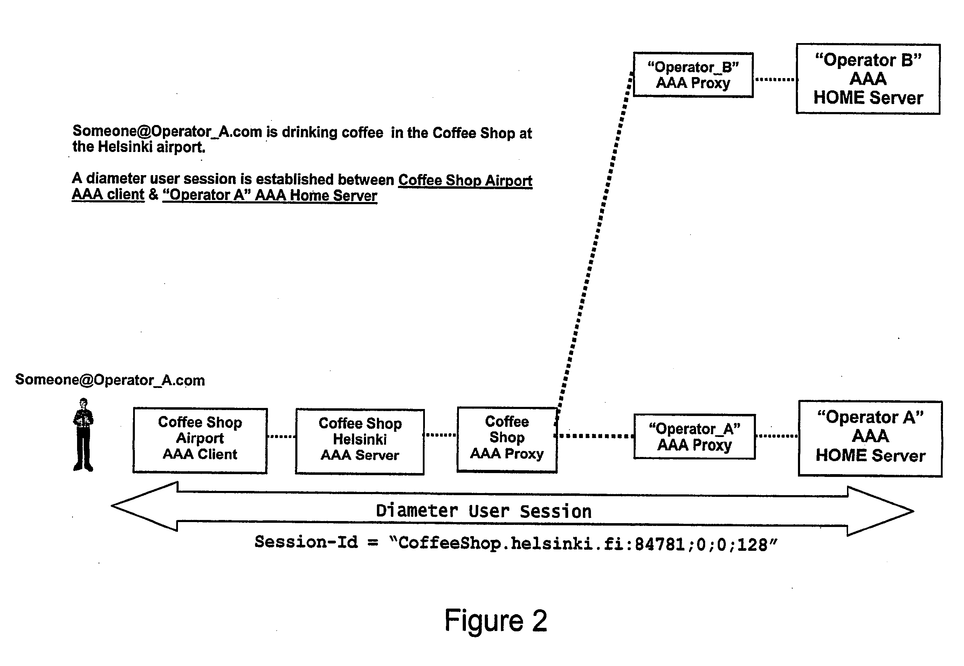

Fig. 2 shows a scenario overview of an AAA deployment with an active Diameter user session. Such a scenario builds the basis for the following description.

In Fig. 2, AAA equipment of three different domains is illustrated. In detail, Operator_A and Operator_B represent service providers with their own domains for each of which an AAA proxy and an AAA home server connected thereto are exemplified, respectively. The third domain is assumed to belong to a fictitious company called "Coffee Shop" which provides its customers with AAA functionality by means of its own AAA deployment. In the figure, Coffee Shop's AAA deployment for one of its chain stores e.g. at Helsinki Airport is depicted, i.e. an AAA client named "Coffee Shop Airport", an AAA server named "Coffee Shop Helsinki", and an AAA proxy named "Coffee Shop". Both of the operators' domains are connected to the company's domain via respective proxy nodes.

In the exemplified scenario, a user registered with Operator_A, i.e. the domain of Operator_A is the user's home domain, is denoted by his address "Someone@Operator_A.com". The user is assumed to be located in the Helsinki airport chain store of "Coffee Shop" for drinking coffee. Since he requests a service of his home domain for which authentication, authorization and/or accounting functions are needed, he connects to the network via Coffee Shop's AAA client in order to establish a user session with an appropriate service node, i.e. the AAA home server, of his home domain. Accordingly, the session is established between "Coffee Shop Airport AAA client" and "Operatot_A AAA Home Server" via the intermediate nodes, namely "Coffee Shop Helsinki AAA server", "Coffee Shop AAA proxy", and "Operator_A AAA proxy", as can be seen in Fig. 2.

In Diameter message format, an attribute-value-pair (AVP) which can be understood as an information field of a Diameter message has been defined for the session-Id. The session-Id is used to identify a specific session. The format of a Diameter session-Id may be the following: <sender's host>: <sender's port>; <increasing 32 bit value>; <optional values>. In the shown example, the session-Id for this (Diameter) user session is "CoffeeShop.helsinki.fi:84781;0;0;128".

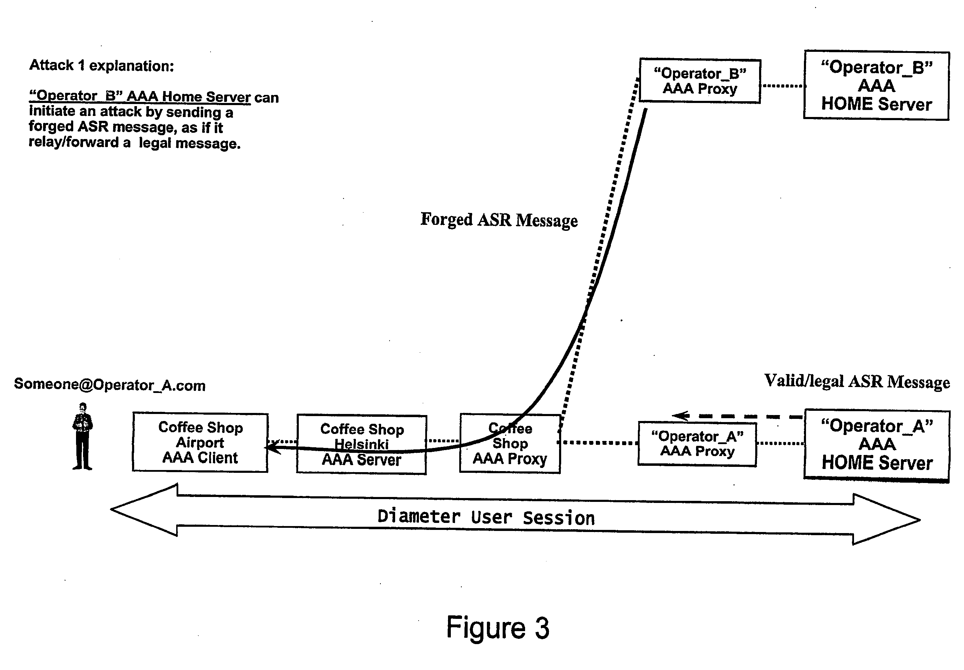

Fig. 3 shows a situation of a first attack to the ongoing Diameter user session in the scenario according to Fig. 2.

The first attack is that a misbehaved/unfriendly AAA server can pretend that it forwards a message on the actual AAA server's behalf. In the shown example, Operator_B's AAA home server initiates such an attack by sending, for example, a forged Abort-Session-Request (ASR) message, as if it relays or forwards a legal ASR message from Operator_A's AAA home server to the AAA client, i.e. "Coffee Shop Airport" AAA client, via which the user is connected to the network. The corresponding route is indicated by an arrow line in Fig. 3.

In detail, a valid ASR message for the active session is exemplarily but not exhaustively composed of the following AVP fields:
Session-Id ="CoffeeShop.helsinki.fi:84781;0;0;128"
Origin-Host = "aaaServer.Operator_A.com"
Origin-Realm = "Operator_A.com"
Destination-Realm = "helsinki.fi"
Destination-Host = "airport.CoffeeShop.helsinki.fi"
Auth-Application-Id = drink_coffee
Route-Record = "aaaServer.Operator_A.com"

In order to perform an attack as it is mentioned above, Operator_B has to find out specific data related to the active session, i.e. the contents of the AVP fields of the valid message. However, since the present invention is not immediately directed to aspects of how to find out about such session-specific data, such aspects are not dealt with herein. In the following, it is to be assumed that Operator_B has previously found out about these data howsoever, possibly by previously eavesdropping of messages associated with that session or the like. It is also conceivable that a misbehaved AAA server would initiate attacks towards a valid existing Diameter user session by simply "guessing" the Diameter session-Id, e.g. by randomly generating Id's of which one might match incidentally with an existing Id.

Then, Operator_B's home server can generate a forged message on the basis of the session-related data it found out, and sends it via its own AAA proxy in direction of the client node in question.

The forged ASR message from Operator_B is exemplarily but not exhaustively composed of the following AVP fields:
Session-Id = "CoffeeShop.helsinki.fi:84781;0;0;128"
Origin-Host = "aaaServer.Operator_A.com"
Origin-Realm = "Operator_A.com"
Destination-Realm = "helsinki.fi"
Destination-Host = "airport.CoffeeShop.helsinki.fi"
Auth-Application-Id = drink_coffee
Route-Record = "aaaServer.Operator_A.com"
Route-Record = "aaaserver.Operator_B.com"

It can be seen that the forged ASR message differs from the valid/actual ASR message shown above only in comprising an additional Route-Record AVP entry. Such a route information indicates from which domain the message effectively originates. In this case, that the message originates at or was routed via the AAA server of Operator_B.

According to conventional solutions such a route information would not raise suspicion in any of the network elements of Coffee Shop's domain, which process and forward this message. Therefore, the forged ASR message finally reaches the Coffee Shop Airport AAA client and the session will be stopped without the user's help or approval.

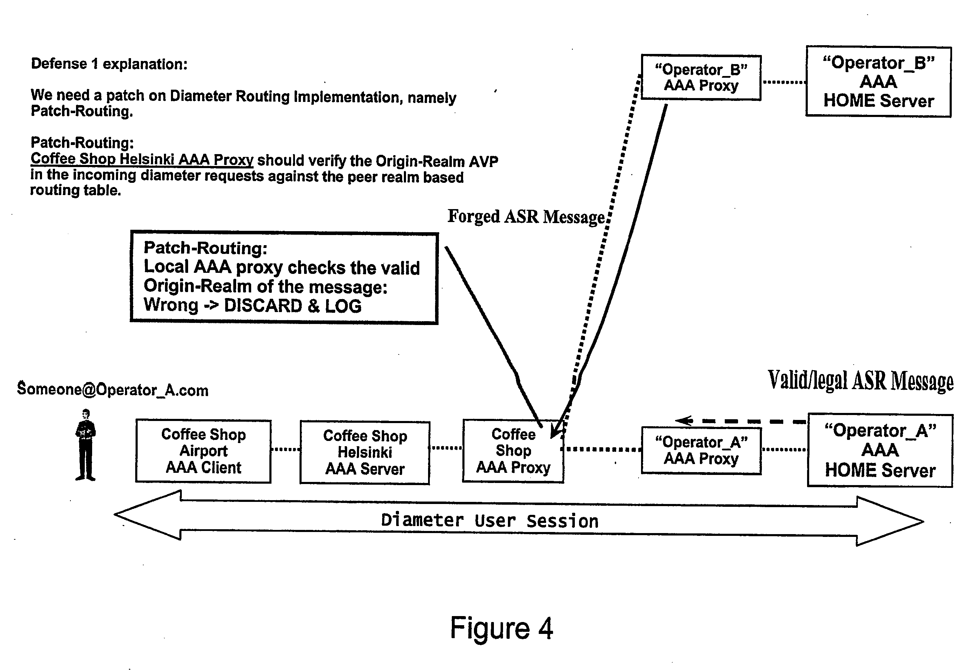

Fig. 4 shows a defense scenario against the first attack according to an embodiment of the present invention.

In Fig. 4, the defense measure is exemplarily implemented in an entry node of the domain in which the user involved in the attacked session is located, i.e. Coffee Shop AAA proxy. Thereby, a forged message can be detected right at the edge of an AAA deployment being involved in an attack.

This first defense measure according to an embodiment of the present invention can be understood as a patch on the routing implementation of the Diameter Base protocol and is, thus, called Patch-Routing. The idea of Patch-Routing is to check the incoming messages such as incoming Diameter messages within a Diameter user session, which should be sent on a certain Diameter peer connection, i.e. from a peer indicated in a routing table of the proxy, or on a lower layer security association. This check defends against the first attack by making good use of a Diameter routing table of a network element e.g. a proxy node, in which this patch is implemented. Such a routing table may according to the depicted example contain the following entries:
Source-Realm = *
Target-Realm = "Operator_A.com"
Action = relay
Next-Hop = "proxy.Operator_A.com"
Alternative Next-Hop = "trusted-AAA-relay.helsinki.fi"

According to Fig. 4, the "Coffee Shop" AAA proxy verifies the Origin-Realm AVP in the incoming message with the peer realm-based routing table such as the one shown above. For this purpose, the respective routing table is used sort of reversely, i.e. the origin realm of the incoming message is compared with the target realm entered in the routing table. Thereby, it should be detected, if the incoming message was actually routed via the path which is designated by the routing table for messages to be sent to this realm.

On the basis of the origin realm of the message, i.e. Operator_A.com, the proxy node detects the respective peer information, i.e. proxy.Operator_A.com. Then, it compares the route information, i.e. aaaServer.Operator_B.com, with the retrieved peer information. If these compared information are equal, it is determined that the message is admitted to be forwarded to the client for which it is destined. If these compared information are unequal, it is determined that the message is not admitted to be forwarded. Thus, only the messages received from the domain "Operator_A.com" and which are actually retrieved from the peer connections to "proxy.Operator_A.com" or "trusted-AAA-relay.helsinki.fi" (not shown) are processed further.

In the forged ASR message according to Fig. 3, the Route-Record AVP indicated that the message was received from "aaaServer.Operator_B.com". This does not correspond to the desired source information according to the routing table, in this example the routing table of the proxy, and thus, the forged message is discarded. Furthermore, the discarded message and/or data being linked with said discarding may also be logged.

In other words, the method according to an embodiment for providing security of a session between a client and a service node of a domain-based network comprises a receiving of a message, which message is associated with said session and destined for said client, an analyzing of the received message in terms of routing information contained therein, a determining, whether the routing information admits said message to be forwarded to said client. If the determining yields that said message is not admitted to be forwarded to said client, a discarding of said message is performed. And if the determining yields that the message is admitted to be forwarded, a forwarding to the client is performed. The above-mentioned routing information may comprise an origin domain information of said message, which indicates a domain from which said message is expected to originate, and may comprise a route information of said message, which indicates from which domain said message actually originates.

Additionally, the method can be supplemented by a further comparison operation in case the "first" determining yielded that the message is admitted to be forwarded. In such a case, said origin domain information may further be compared with a local domain, i.e. the domain of the network element performing the processing of the message, e.g. a proxy node of the domain of the client, and/or with a home domain of the user requesting a service, e.g. the domain of Operator_A in this example. Such a "second" processing may then be performed in an AAA server of the respective domain.

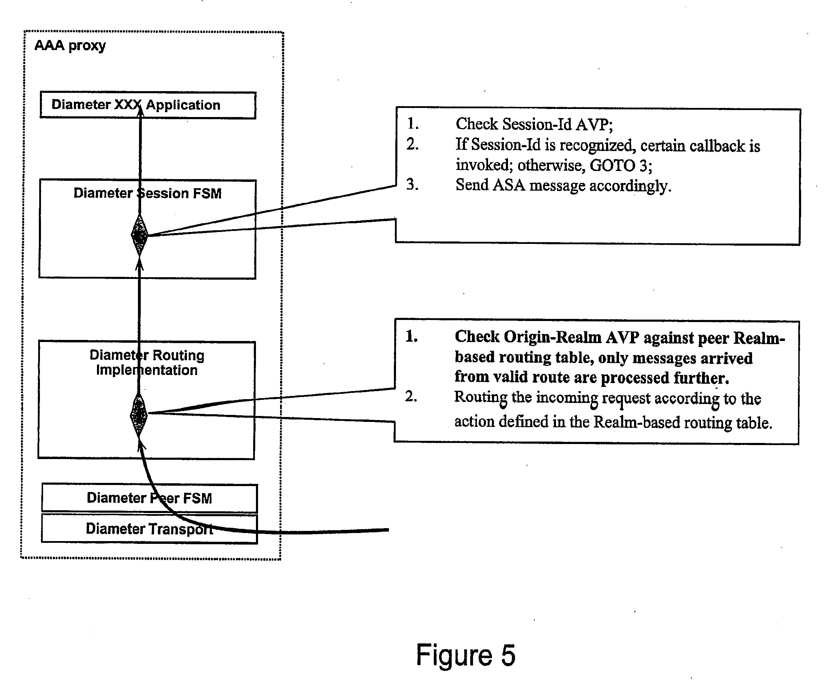

Fig. 5 illustrates a processing of the defense against the first attack according to the embodiment of the present invention, namely a Patch-Routing processing.

In Fig. 5, a Diameter protocol stack of the network element performing the first defense measure, i.e. the AAA proxy, is shown. It is apparent that the incoming message is passed through the Diameter Transport layer and the Diameter Peer FSM (finite state machine) layer to the Diameter Routing Implementation. Therein, the implementation of the Patch-Routing defense measure according to the present embodiment is realized. Namely, the aforementioned check of the origin domain/realm information of the incoming message against the inherent routing table of the respective network element, in this example the "Coffee Shop AAA proxy" is performed, and only messages that arrived from a valid route are admitted to be processed further.

After determining the incoming message in the preceding step to be a valid message, it is routed according to the action defined in the routing table, e.g. relay or redirect, and forwarded to the Diameter Session FSM layer, where the session-Id is checked. If the session-Id is recognized, i.e. if the current session-Id matches with a session-Id of an active session being known at the respective network element, a predetermined callback function is evoked. If the session-Id is not recognized, an Abort-Session-Answer (ASA) message according to the Diameter Base protocol is sent accordingly. Thereafter, the message can be passed on to the Diameter XXXX Application layer with XXX denoting a specific application to be carried out.

As to the above-mentioned callback functions, such callbacks implement an application profile processing for incoming messages, which may extend the basic attribute-value-pair data format of the Diameter protocol, for example. An application profile customizability is reflected into the application programming interface (API) as callback functions. A callback function, or message processor, comprises implementation details about how to handle the incoming AAA message. The processing logics specified to certain AAA messages are registered first, and when certain AAA messages arrive, the respective callback function will take care of the messages and invoke the specified processing logics according to the registration information. Details on implementation may be found in the Diameter API Internet draft, i.e. "draft-kempf-diameter-api-04.txt" of March 2001.

In order that a network element such as an AAA proxy is able to perform the steps of the aforementioned method, the network element comprises: a receiver which receives the message, an analyzer which analyzes said received message in terms of routing information contained therein, a determinator which determines, whether said routing information admits said message to be forwarded to said client, and a message processor which discards or forwards said message, if said determinator yields that said message is not admitted or is admitted to be forwarded to said client.

It is to be noted that the mentioned receiver, analyzer, determinator, and message processor can be implemented by any known means, either in hardware and/or software, respectively, if it is only adapted to perform the described functions of the respective parts. For example, the analyzer can be implemented by any data processing unit, e.g. a microprocessor, being adapted to analyze the contents of messages in terms of a given information format or specification. The mentioned parts can also be realized in individual functional blocks or by individual means, or one or more of the mentioned parts can be realized in a single functional block or by a single means.

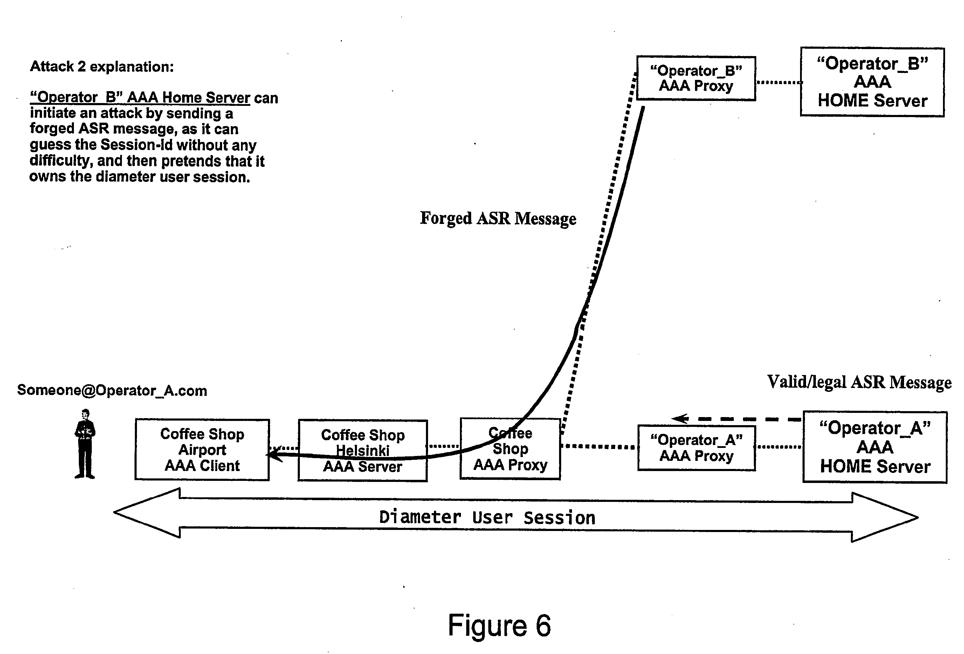

Fig. 6 shows a situation of a second attack to the ongoing Diameter user session in the scenario according to Fig. 2.

The second attack is that a misbehaved/unfriendly AAA server can pretend that it owns the Diameter user session, and tries to interfere the state of the existing Diameter user session. In the shown example, Operator_B's AAA home server initiates such an attack by sending, for example, a forged Abort-Session-Request (ASR) message, as it can guess the session-ID as mentioned beforehand, and then pretends that it owns the session. Such a pretending is effected in that Operator_B creates a forged ASR message with "aaaServer.Operator_B.com" as origin host and "Operator_B.com" as origin realm or domain. In detail, a forged ASR message according to the second attack is composed of the following AVP fields:
Session-Id = "CoffeeShop.helsinki.fi:84781;0;0;128"
Origin-Host = "aaaServer.Operator_B.com"
Origin-Realm = "Operator_B.com"
Destination-Realm = "helsinki.fi"
Destination-Host = "airport.CoffeeShop.helsinki.fi"
Auth-Application-Id = drink_coffee

The necessary session-related information for performing such an attack is again assumed to be already known to Operator_B.

Operator_B then sends this message via its own AAA proxy to the AAA client via which the user is connected to the network along the route indicated by the arrow line in Fig. 6.

It can be seen that the forged ASR message differs from the valid/actual ASR message, which is equivalent to the actual ASR message according to Fig. 3, in the Origin-Host AVP and the Origin-Realm AVP since "Operator_B.com" is defined therein as origin domain. The Route-Record AVP is not shown since it does not play a role in this scenario.

According to conventional solutions, such a message would finally reach the "Coffee Shop Airport" AAA client and the session would be terminated without the user's help or approval.

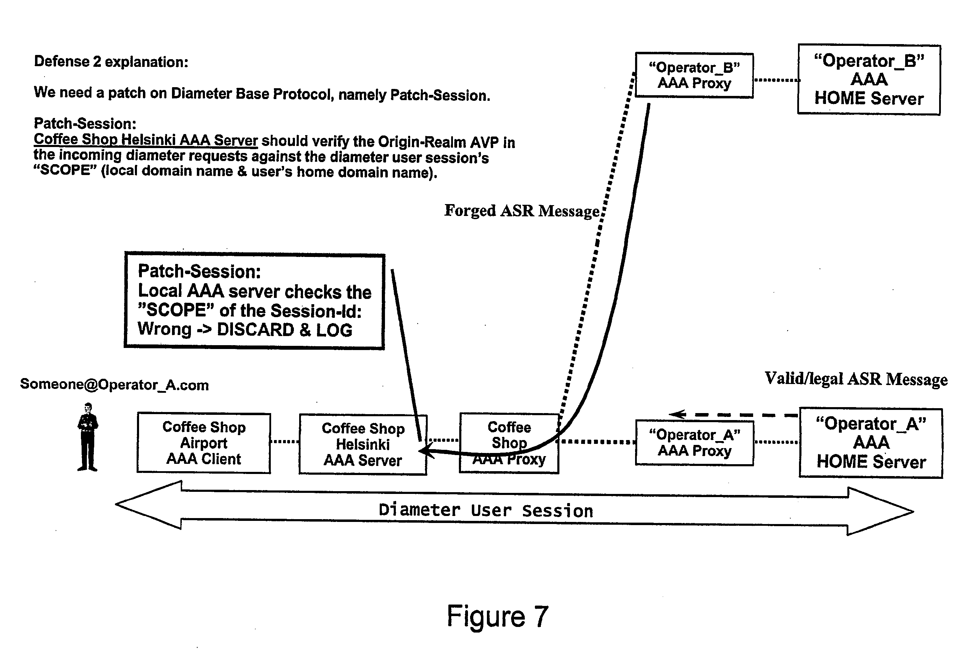

Fig. 7 shows a defense scenario against the second attack according to a comparative example serving for illustrative purposes.

In Fig. 7, the defense measure is exemplarily implemented in a service node or server of the domain in which the user participating in the attacked session is located, i.e. "Coffee Shop" AAA server.

This second defense measure according to a comparative example does not directly relate to routing functionalities. It can rather be understood as a patch on the Diameter Base protocol itself and is, thus, called Patch-Session. However, it also utilizes available routing information, but the processing can be performed differently and even in a different functional entity and/or network element. In this measure, it is not required to utilize a routing table, for example. The idea of Patch-Session is to check the incoming Diameter messages within a Diameter user session, which must be sent from either the local domain or the user's home domain. This check defends against the second attack according to Fig. 6.

According to Fig. 7, the "Coffee Shop Helsinki" AAA server verifies the Origin-Realm AVP in the incoming message with the scope of the active Diameter user session, i.e. the local domain and the user's home domain. Only the messages with "CoffeeShop" (i.e. the local domain) or "Operator_A.com" (i.e. the user's hoem domain) as origin realm actually retrieved from the peer connections to "proxy.Operator_A.com" or "trusted-AAA-relay.helsinki.fi" (not shown) are processed further.

In the forged ASR message according to Fig. 6, the Origin-Realm AVP indicates that the message originates from "Operator_B.com". This does not correspond to the desired/valid source domain/realm and, thus, the forged message is discarded. Furthermore, the discarded message and/or data being linked with said discarding may also be logged.

In other words, the method according to the comparative example for providing security of a session between a client and a service node of a domain-based network comprises a receiving of a message, which message is associated with said session and destined for said client, an analyzing of the received message in terms of routing information contained therein, a determining, whether the routing information admits said message to be forwarded to said client. If the determining yields that said message is not admitted to be forwarded to said client, a discarding of said message is performed. And if the determining yields that the message is admitted to be forwarded, a forwarding to the client is performed. The above-mentioned routing information may comprise an origin domain information of said message, which indicates a domain from which the message originates.

As described above, the determining may comprise a step of comparing the origin domain information with a local domain and/or a home domain of the user requesting a service.

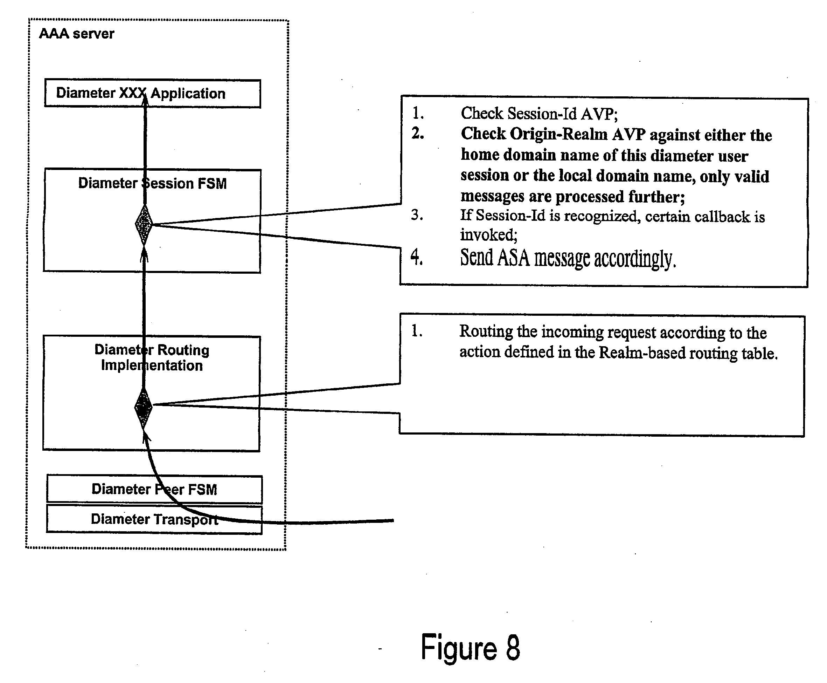

Fig. 8 illustrates a processing of the defense against the second attack according to the comparative example, namely a Patch-Session processing.

In Fig. 8, a Diameter protocol stack of the network element performing the second defense measure, i.e. the AAA server, is shown. It is apparent that the incoming message is passed through the Diameter Transport layer and the Diameter Peer FSM (finite state machine) layer to the Diameter Routing Implementation. Therein, the incoming message is routed according to the action defmed in the routing table, e.g. relay or redirect, and forwarded to the Diameter Session FSM layer, where the session-Id AVP is checked. In a next step, the actual Patch-Session defense measure is performed. Namely, the aforementioned check of the Origin-Realm AVP, i.e. the origin domain information of the incoming message, against either the home domain of this Diameter user session or the local domain name is effected, and only valid messages are admitted to be processed further.

If the session-Id is recognized, i.e. if it matches with a session-Id of an active session being known at the respective network element, a predetermined callback function is evoked, for the function of which reference is made to the description of Figure 5. If the session-Id is not recognized, an Abort-Session-Answer (ASA) message according to the Diameter Base protocol is sent accordingly. Thereafter, the message can be passed on to the Diameter XXX Application layer with XXX denoting a specific application to be carried out.

In order that a network element such as an AAA server is able to perform the steps of the aforementioned method, the network element comprises: a receiver which receives the message, an analyzer which analyzes said received message in terms of routing information contained therein, a determinator which determines, whether said routing information admits said message to be forwarded to said client, and a message processor which discards or forwards said message, if said determinator yields that said message is not admitted or is admitted to be forwarded to said client.

It is to be noted that the mentioned receiver, analyzer, determinator, and message processor can be implemented by any known means, either in hardware and/or software, respectively, if it is only adapted to perform the described functions of the respective parts. For example, the analyzer can be implemented by any data processing unit, e.g. a microprocessor, being adapted to analyze the contents of messages in terms of a given information format or specification. The mentioned parts can also be realized in individual functional blocks or by individual means, or one or more of the mentioned parts can be realized in a single functional block or by a single means.

According to an embodiment of the present invention, which is a modification or furter development of the above-mentioned embodiment, the two above described patches can also be used together and/or consecutively. Thereby, the functionalities and advantages of both measures can be combined in that Patch-Routing according to the above embodiment and Patch-Session according to the comparative example are combined to operate cooperatively.

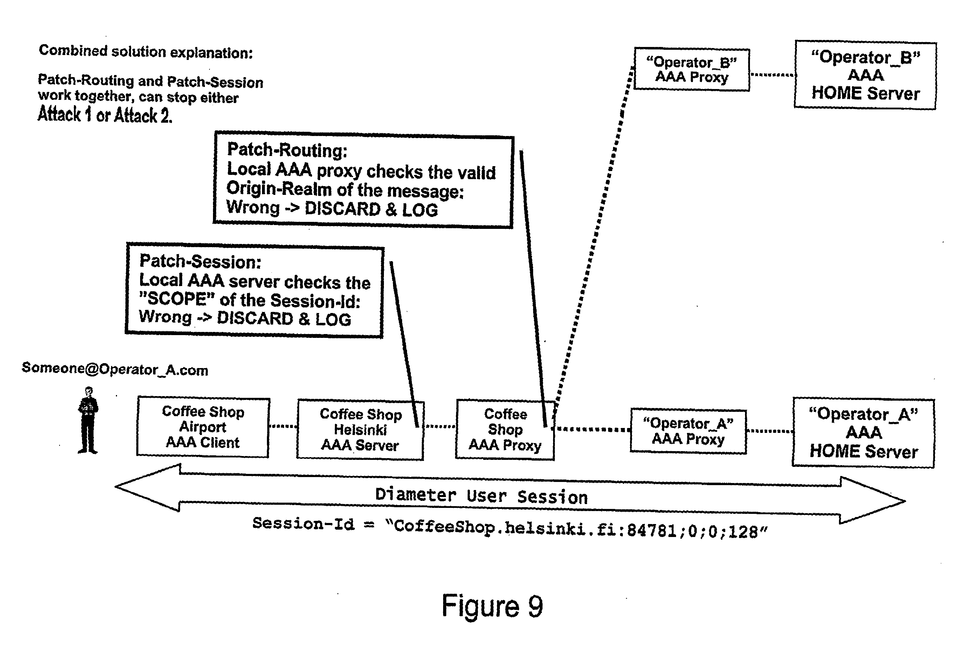

Fig. 9 shows a defense scenario against the first and second attacks according to a modified embodiment of the present invention.

The underlying scenario is the same as presented according to Fig. 2 with an active session between a user "Someone@Operator_A.com" and an "Operator_A AAA Home Server". In order to protect the Diameter user session against both of the above described attacks simultaneously, both patches on the Diameter Base protocol are implemented in the AAA deployment of Coffee Shop's chain store at Helsinki airport.

More specifically, a Patch-Routing measure to check the incoming Diameter messages within a Diameter user session, which must be sent upon a certain Diameter peer connection or a lower layer security association, is exemplarily implemented in Coffee Shop's AAA proxy. Additionally, a Patch-Session measure to check the incoming Diameter messages within a Diameter user session, which must be sent from either the local domain or the user's home domain, is exemplarily implemented in Coffee Shop's Helsinki AAA server. Both measures work independently from each other and, together, provide for an increased end-to-end security for AAA user sessions.

Since the functions of the measures are the same as according to the above embodiment of the present invention and the above comparative example, their description is omitted herein.

A system embodying the modified embodiment of the present application may comprise a proxy node, e.g. a proxy node according to the above embodiment, and a server node, e.g. a server node according to the comparative example, of the domain of the client, via which a user requesting a service is connected to the domain-based network. In such a system, the proxy node is advantageously arranged upstream of the server node as regards the direction of the message associated to the active session and destined for the client.

As is to be understood from the above, the present invention relates generally to the security of a user session, and particularly to the security of a Diameter user session.

The present invention is also relevant to 3GPP, namely the Ws interface. But it also applies to the Wr interface since a WLAN access network (AN) can have connections to multiple 3GPP visited networks.

To protect the Diameter user sessions against the above attacks, two new patches are introduced herein. Both are patches on the Diameter Base Protocol.

In order to protect against the attacks among the peer realms, the peer AAA proxies at the boundary are advised to adopt the security measures of the embodiments of the present invention, so that neither would be "hijacked" by a third party.

Methods, network elements, and a system for providing security of a session between a client of a domain of a network and a service node of said network are provided, which network consists of a plurality of domains, from which domain a user connected to said network via said client requests a service. The providing of security is based on analyzing a message, which is associated with said session and destined for said client, in terms of routing information. Such routing information may comprise an origin domain information of said message and a route information of said message, or an origin domain information of said message, which indicates a domain from which said message originates. The present invention is particularly advantageous for AAA sessions associated with authentication, authorization, and accounting functions and for usage of Diameter Base protocol.

Even though the invention is described above with reference to the examples according to the accompanying drawings, it is clear that the invention is not restricted thereto. Rather, it is apparent to those skilled in the art that the present invention can be modified in many ways without departing from the scope of the inventive idea as disclosed in the appended claims.

## Claims

1. A method for providing security of a session between a client of a domain of a network and a service node of said network, which network consists of a plurality of domains, from which domain a user connected to said network via said client requests a service; said method comprising:
receiving a message in a network element of said domain, which message is associated with said session and destined for said client;
analyzing said message in said network element in terms of routing information contained therein;
determining, in said network element, whether said routing information admits said message to be forwarded to said client; and
discarding of said message in said network element, if said determining yields that said message is not admitted to be forwarded to said client,
**characterized in that** said routing information comprises an origin domain information of said message, which indicates a domain from which said message is expected to originate, and comprises a route information of said message, which indicates from which domain said message actually originates.

2. The method according to claim 1, further comprising forwarding of said message to said client, if said determining yields that said message is admitted to be forwarded to said client.

3. The method according to claim 1, wherein said determining comprises a first comparison of comparing of said route information with a peer information of a routing table of said network element on the basis of said origin domain information of said message.

4. The method according to claim 3, wherein said determining yields that said message is not admitted to be forwarded, if compared information from said first comparison are unequal.

5. The method according to claim 3, wherein said determining yields that said message is admitted to be forwarded, if compared information from said first comparison are equal.

6. The method according to claim 1, wherein said method occurs in a proxy node of said domain of said client.

7. The method according to claim 5, wherein said determining further comprises a second comparison of comparing of said origin domain information with at least one of a local domain, which is said domain of said network element, and a home domain of said user, which indicates a domain with which said user is registered.

8. The method according to claim 7, wherein said determining yields that said message is not admitted to be forwarded, if compared information from said second comparison are unequal.

9. The method according to claim 7, wherein said determining yields that said message is admitted to be forwarded, if compared information from said second comparison are equal.

10. The method according to claim 7, wherein said method occurs in a server node of said domain of said client.

11. The method according to claim 1, wherein said session is an AAA session associated with authentication, authorization, and accounting functions.

12. The method according to claim 11, wherein said session and said message are processed based on a Diameter Base protocol.

13. A network element of a domain of a network consisting of a plurality of domains, which provides security of a session between a client of said domain of said network and a service node of said network, from which domain a user connected to said network via said client requests a service; comprising:
receiving means for receiving a message which is associated with said session and destined for said client;
analyzing means for analyzing said message in terms of routing information contained therein;
determining means for determining, whether said routing information admits said message to be forwarded to said client; and
message processing means for discarding said message, if said determining means yields that said message is not admitted to be forwarded to said client;
**characterized in that** said routing information comprises an origin domain information of said message, which indicates a domain from which said message is expected to originate, and comprises a route information of said message, which indicates from which domain said message actually originates.

14. The network element according to claim 13, wherein said message processing means is adapted to forward said message to said client, if said determining means yields that said message is admitted to be forwarded to said client.

15. The network element according to claim 13, wherein said determining means further comprises comparing means for comparing said route information with a peer information of a routing table of said network element on the basis of said origin domain of said message.

16. The network element according to claim 13, which is a proxy node of said domain of said client.

17. The network element according to claim 13, wherein said session is an AAA session associated with authentication, authorization, and accounting functions.

18. The network element according to claim 17, wherein said session and said message are processed based on a Diameter Base protocol.

19. A system of a domain of a network consisting of a plurality of domains, which is adapted to provide security of a session between a client of said domain of said network and a service node of said network, from which domain a user connected to said network via said client requests a service; comprising
a receiver for receiving a message which is associated with said session and destined for said client;
an analyzer for analyzing said message in terms of routing information contained therein;
a determinator for determining, whether said routing information admits said message to be forwarded to said client; and
a message processor for discarding said message, if said determinator yields that said message is not admitted to be forwarded to said client,
**characterized in that** said routing information comprises an origin domain information of said message, which indicates a domain from which said message is expected to originate, and comprises a route information of said message, which indicates from which domain said message actually originates.

20. The system according to claim 19, wherein said message processor is adapted to forward said message, if said determinator yields that said message is admitted to be forwarded to said client.

21. The system according to claim 19, wherein said determinator further comprises a comparator for comparing said routing information with predetermined information associated with said session.

22. The system according to claim 19, comprising a proxy node and a server node of said domain of said client, wherein said proxy node is arranged upstream of said server node in regard to the direction of said message.

23. The system according to claim 19, wherein said session is an AAA session associated with authentication, authorization, and accounting functions.

24. The system according to claim 23, wherein said session and said message are processed based on a Diameter Base protocol.

25. A computer program embodied on a computer-readable medium comprising program code configured to operate a network element within a domain of a network consisting of a plurality of domains, which is adapted to provide security of a session between a client of said domain of said network and a service node of said network, from which domain a user connected to said network via said client requests a service, the computer program being configured to perform a method according to any one of claims 1 to 12.

## Patentansprüche

1. Verfahren zum Bereitstellen einer Sicherheit einer Sitzung zwischen einem Client einer Domäne eines Netzwerks und einem Dienstknoten des Netzwerks, wobei das Netzwerk aus einer Vielzahl von Domänen besteht, und wobei ein mit dem Netzwerk verbundener Nutzer aus der Domäne über den Client einen Dienst anfordert; wobei das Verfahren aufweist:
Empfangen einer Nachricht in einem Netzwerkelement der Domäne, wobei die Nachricht mit der Sitzung verknüpft ist und für den Client bestimmt ist;
Analysieren der Nachricht in dem Netzwerkelement in Bezug auf eine darin enthaltene Leitweginformation;
Bestimmen in dem Netzwerkelement, ob die Leitweginformation erlaubt, dass die Nachricht an den Client weiterzuleiten ist; und
Verwerfen der Nachricht in dem Netzwerkelement, wenn das Bestimmen ergibt, dass die Nachricht nicht zugelassen ist, an den Client weitergeleitet zu werden,
**dadurch gekennzeichnet, dass**
die Leitweginformation eine Ursprungsdomäneninformation der Nachricht aufweist, die eine Domäne angibt, von der erwartet wird, dass die Nachricht von dort stammt, und eine Streckeninformation der Nachricht aufweist, die angibt, aus welcher Domäne die Nachricht eigentlich stammt.

2. Verfahren nach Anspruch 1, ferner mit
Weiterleiten der Nachricht an den Client, wenn das Bestimmen ergibt, dass die Nachricht zugelassen ist, an den Client weitergeleitet zu werden.

3. Verfahren nach Anspruch 1, wobei das Bestimmen einen ersten Vergleich aufweist, in dem die Streckeninformation mit einer Partnerinformation einer Leitwegtabelle des Netzwerkelements auf der Basis der Ursprungsdomäneninformation der Nachricht verglichen wird.

4. Verfahren nach Anspruch 3, wobei das Bestimmen ergibt, dass die Nachricht nicht zugelassen wird, weitergeleitet zu werden, wenn die verglichenen Informationen aus dem ersten Vergleich ungleich sind.

5. Verfahren nach Anspruch 3, wobei das Bestimmen ergibt, dass die Nachricht zugelassen wird, weitergeleitet zu werden, wenn die verglichenen Informationen aus dem ersten Vergleich gleich sind.

6. Verfahren nach Anspruch 1, wobei das Verfahren in einem Proxy-Knoten der Domäne des Clients auftritt.

7. Verfahren nach Anspruch 5, wobei das Bestimmen ferner einen zweiten Vergleich aufweist, in dem die Ursprungsdomäneninformation mit zumindest einer aus einer lokalen Domäne, die die Domäne des Netzwerkelements ist, und einer Heimatdomäne des Nutzers verglichen wird, die eine Domäne angibt, bei der der Nutzer registriert ist.

8. Verfahren nach Anspruch 7, wobei das Bestimmen ergibt, dass die Nachricht nicht zugelassen wird, weitergeleitet zu werden, wenn die verglichenen Informationen von dem zweiten Vergleich ungleich sind.

9. Verfahren nach Anspruch 7, wobei das Bestimmen ergibt, dass die Nachricht zugelassen wird, weitergeleitet zu werden, wenn die verglichenen Informationen von dem zweiten Vergleich gleich sind.

10. Verfahren nach Anspruch 7, wobei das Verfahren in einem Dienstknoten der Domäne des Clients auftritt.

11. Verfahren nach Anspruch 1, wobei die Sitzung eine AAA-Sitzung ist, die mit Authentifizierung, Autorisierung und Abrechnungsfunktionen verknüpft ist.

12. Verfahren nach Anspruch 1, wobei die Sitzung und die Nachricht basierend auf einem Diameter Base Protokoll verarbeitet werden.

13. Netzwerkelement einer Domäne eines aus einer Vielzahl von Domänen bestehenden Netzwerks, das eine Sicherheit einer Sitzung zwischen einem Client der Domäne des Netzwerks und einem Dienstknoten des Netzwerks bereitstellt, wobei ein mit dem Netzwerk verbundener Nutzer aus der Domäne über den Client einen Dienst anfordert; wobei das Netzwerkelement aufweist:
eine Empfangseinrichtung zum Empfangen einer Nachricht, die verknüpft ist mit der Sitzung und bestimmt ist für den Client;
eine Analysiereinrichtung zum Analysieren der Nachricht in Bezug auf eine darin enthaltene Leitwegformation;
eine Bestimmungseinrichtung zum Bestimmen, ob die Leitweginformation zulässt, dass die Nachricht an den Client weiterzuleiten ist; und
eine Nachrichtenverarbeitungseinrichtung zum Verwerfen der Nachricht, wenn die Bestimmungseinrichtung ergibt, dass die Nachricht nicht zugelassen ist, an den Client weitergeleitet zu werden;
**dadurch gekennzeichnet, dass**
die Leitweginformation eine Ursprungsdomäneninformation der Nachricht aufweist, die eine Domäne angibt, von der erwartet wird, dass die Nachricht von dort stammt, und eine Streckeninformation der Nachricht aufweist, die anzeigt, aus welcher Domäne die Nachricht eigentlich stammt.

14. Netzwerkelement nach Anspruch 13, wobei die Nachrichtenverarbeitungseinrichtung angepasst ist, die Nachricht an den Client weiterzuleiten, wenn die Bestimmungseinrichtung ergibt, dass die Nachricht zugelassen ist, an den Client weitergeleitet zu werden.

15. Netzwerkelement nach Anspruch 13, wobei die Bestimmungseinrichtung ferner eine Vergleichseinrichtung zum Vergleichen der Streckeninformation mit einer Partnerinformation einer Leitwegtabelle des Netzwerkelements auf der Basis der Ursprungsdomäne der Nachricht aufweist.

16. Netzwerkelement nach Anspruch 13, das ein Proxy-Knoten der Domäne des Clients ist.

17. Netzwerkelement nach Anspruch 13, wobei die Sitzung eine AAA-Sitzung ist, die mit Authentifizierung, Autorisierung und Abrechnungsfunktionen verknüpft ist.

18. Netzwerkelement nach Anspruch 17, wobei die Sitzung und die Nachricht basierend auf einem Diameter Base Protokoll verarbeitet werden.

19. System einer Domäne eines aus einer Vielzahl von Domänen bestehenden Netzwerks, das angepasst ist, eine Sicherheit einer Sitzung zwischen einem Client der Domäne des Netzwerks und einem Dienstknoten des Netzwerks bereitzustellen, wobei ein mit dem Netzwerk verbundener Nutzer aus der Domäne über den Client einen Dienst anfordert; und wobei das System aufweist:
einen Empfänger zum Empfangen einer Nachricht, die mit der Sitzung verknüpft und für den Client bestimmt ist;
einen Analysierer zum Analysieren der Nachricht in Bezug auf eine darin enthaltene Leitweginformation;
einen Bestimmer zum Bestimmen, ob die Leitweginformation zulässt, dass die Nachricht an den Client weitergeleitet wird; und
einen Nachrichtenverarbeiter zum Verwerfen der Nachricht, wenn der Bestimmer ergibt, dass die Nachricht nicht zugelassen ist, an den Client weitergeleitet zu werden,
**dadurch gekennzeichnet, dass**
die Leitweginformation eine Ursprungsdomäneninformation der Nachricht aufweist, die eine Domäne angibt, von der erwartet wird, dass die Nachricht von dort stammt, und eine Streckeninformation der Nachricht aufweist, die angibt, aus welcher Domäne die Nachricht eigentlich stammt.

20. System nach Anspruch 19, wobei der Nachrichtenverarbeiter angepasst ist, die Nachricht weiterzuleiten, wenn der Bestimmer ergibt, dass die Nachricht zugelassen ist, an den Client weitergeleitet zu werden.

21. System nach Anspruch 19, wobei der Bestimmer ferner einen Vergleicher zum Vergleichen der Leitweginformation mit einer vorbestimmten Information aufweist, die mit der Sitzung verknüpft ist.

22. System nach Anspruch 19, das einen Proxy-Knoten und einen Dienstknoten der Domäne des Clients aufweist, wobei der Proxy-Knoten mit Bezug auf die Flussrichtung der Nachricht flussaufwärts von dem Dienstknoten angeordnet ist.

23. System nach Anspruch 19, wobei die Sitzung eine AAA-Sitzung ist, die mit Authentifizierung, Autorisierung und Abrechnungsfunktionen verknüpft ist.

24. System nach Anspruch 23, wobei die Sitzung und die Nachricht basierend auf einem Diameter Base Protokoll verarbeitet werden.

25. Computerprogramm, das auf einem Computer-lesbaren Medium verkörpert ist, das Programmcode aufweist, der konfiguriert ist, ein Netzwerkelement in einer Domäne eines aus einer Vielzahl von Domänen bestehenden Netzwerks zu betreiben, das angepasst ist, eine Sicherheit einer Sitzung zwischen einem Client der Domäne des Netzwerks und einem Dienstknoten des Netzwerks bereitzustellen, wobei ein mit dem Netzwerk verbundener Nutzer aus der Domäne über den Client einen Dienst anfordert, und wobei das Computerprogramm konfiguriert ist, ein Verfahren nach einem der Ansprüche 1 bis 12 durchzuführen.

## Revendications

1. Procédé permettant de fournir la sécurité d'une session entre un client d'un domaine d'un réseau et un noeud de service dudit réseau, lequel réseau consiste en une pluralité de domaines,
domaine à partir duquel un utilisateur connecté audit réseau par l'intermédiaire dudit client demande un service ; ladite méthode comprenant les étapes consistant à :
recevoir un message dans un élément de réseau dudit domaine, lequel message est associé à ladite session et est à destination dudit client ;
analyser ledit message dans ledit élément de réseau en fonction des informations d'acheminement qu'il contient ;
déterminer, dans ledit élément de réseau, si lesdites informations d'acheminement admettent que ledit message soit transmis audit client ; et
écarter ledit message dans ledit élément de réseau, si ladite étape de détermination établit que ledit message n'est pas admis à être transmis audit client,
**caractérisé en ce que** lesdites informations d'acheminement comprennent des informations de domaine d'origine dudit message, qui indiquent un domaine à partir duquel ledit message est supposé provenir, et comprend des informations d'itinéraire dudit message, qui indiquent de quel domaine ledit message provient réellement.

2. Procédé selon la revendication 1, comprenant en outre la transmission dudit message audit client, si ladite étape de détermination établit que ledit message est admis à être transmis audit client.

3. Procédé selon la revendication 1, dans lequel ladite étape de détermination comprend une première comparaison consistant à comparer lesdites informations d'itinéraire avec des informations correspondantes d'une table d'acheminement dudit élément de réseau sur la base desdites information de domaine d'origine dudit message.

4. Procédé selon la revendication 3, dans lequel ladite étape de détermination établit que ledit message n'est pas admis à être transmis, si des informations comparées provenant de ladite première comparaison sont inégales.

5. Procédé selon la revendication 3, dans lequel ladite étape de détermination établit que ledit message est admis à être transmis, si des informations comparées provenant de ladite première comparaison sont égales.

6. Procédé selon la revendication 1, dans lequel ledit procédé intervient dans un noeud de serveur mandataire dudit domaine dudit client.

7. Procédé selon la revendication 5, dans lequel ladite étape de détermination comprend en outre une seconde comparaison consistant à comparer lesdites informations de domaine d'origine avec au moins un parmi un domaine local, qui est ledit domaine dudit élément de réseau, et un domaine domestique dudit utilisateur, qui indique un domaine auprès duquel ledit utilisateur est enregistré.

8. Procédé selon la revendication 7, dans lequel ladite étape de détermination établit que ledit message n'est pas admis à être transmis, si des informations comparées provenant de ladite seconde comparaison sont inégales.

9. Procédé selon la revendication 7, dans lequel ladite étape de détermination établit que ledit message est admis à être transmis, si des informations comparées provenant de ladite seconde comparaison sont égales.

10. Procédé selon la revendication 7, dans lequel ledit procédé intervient dans un noeud de serveur dudit domaine dudit client.

11. Procédé selon la revendication 1, dans lequel ladite session est une session AAA associée à des fonctions d'authentification, d'autorisation, et de comptabilité.

12. Procédé selon la revendication 11, dans lequel ladite session et ledit message sont traités sur la base d'un protocole "Diameter Base".

13. Elément de réseau d'un domaine d'un réseau consistant en une pluralité de domaines, qui fournit la sécurité d'une session entre un client dudit domaine dudit réseau et un noeud de service dudit réseau, domaine à partir duquel un utilisateur connecté audit réseau par l'intermédiaire dudit client demande un service, comprenant :
des moyens de réception pour recevoir un message qui est associé à ladite session et est à destination dudit client ;
des moyens d'analyse pour analyser ledit message en fonction des informations d'acheminement qu'il contient ;
des moyens de détermination pour déterminer, si lesdites informations d'acheminement admettent que ledit message soit transmis audit client ; et
des moyens de traitement de message pour écarter ledit message, si lesdits moyens de détermination établissent que ledit message n'est pas admis à être transmis audit client,
**caractérisé en ce que** lesdites informations d'acheminement comprennent des informations de domaine d'origine dudit message, qui indiquent un domaine à partir duquel ledit message est supposé provenir, et comprennent des informations d'itinéraire dudit message, qui indiquent de quel domaine ledit message provient réellement.

14. Elément de réseau selon la revendication 13, dans lequel lesdits moyens de traitement de message sont adaptés pour transmettre ledit message audit client, si lesdits moyens de détermination établissent que ledit message est admis à être transmis audit client.

15. Elément de réseau selon la revendication 13, dans lequel lesdits moyens de détermination comprennent en outre des moyens de comparaison pour comparer lesdites informations d'itinéraire avec des informations correspondantes d'une table d'acheminement dudit élément de réseau sur la base dudit domaine d'origine dudit message.

16. Elément de réseau selon la revendication 13, qui est un noeud de serveur mandataire dudit domaine dudit client.

17. Elément de réseau selon la revendication 13, dans lequel ladite session est une session AAA associée à des fonctions d'authentification, d'autorisation, et de comptabilité.

18. Elément de réseau selon la revendication 17, dans lequel ladite session et ledit message sont traités sur la base d'un protocole "Diameter Base".

19. Système d'un domaine d'un réseau consistant en une pluralité de domaines, qui est adapté pour fournir la sécurité d'une session entre un client dudit domaine dudit réseau et un noeud de service dudit réseau, domaine à partir duquel un utilisateur connecté audit réseau par l'intermédiaire dudit client demande un service ; comprenant :
un récepteur pour recevoir un message qui est associé à ladite session et est à destination dudit client ;
un analyseur pour analyser ledit message en fonction des informations d'acheminement qu'il contient ;
un déterminateur pour déterminer, si lesdites informations d'acheminement admettent que ledit message soit transmis audit client ; et
un processeur de message pour écarter ledit message, si ledit déterminateur établit que ledit message n'est pas admis à être transmis audit client,
**caractérisé en ce que** lesdites informations d'acheminement comprennent des informations de domaine d'origine dudit message, qui indiquent un domaine à partir duquel ledit message est supposé provenir, et comprend des informations d'itinéraire dudit message, qui indiquent de quel domaine ledit message provient réellement.

20. Système selon la revendication 19, dans lequel ledit processeur de message est adapté pour transmettre ledit message, si ledit déterminateur établit que ledit message est admis à être transmis audit client.

21. Système selon la revendication 19, dans lequel ledit déterminateur comprend en outre un comparateur pour comparer lesdites informations d'acheminement avec des informations prédéterminées associées à ladite session.

22. Système selon la revendication 19, comprenant un noeud de serveur mandataire et un noeud de serveur dudit domaine dudit client, dans lequel ledit noeud de serveur mandataire est agencé en amont dudit noeud de serveur en ce qui concerne la direction dudit message.

23. Système selon la revendication 19, dans lequel ladite session est une session AAA associée à des fonctions d'authentification, d'autorisation, et de comptabilité.

24. Système selon la revendication 23, dans lequel ladite session et ledit message sont traités sur la base d'un protocole "Diameter Base".

25. Programme informatique incorporé sur un support lisible par ordinateur comprenant un code de programme configuré pour exploiter un élément de réseau dans un domaine d'un réseau consistant en une pluralité de domaines, qui est adapté pour fournir la sécurité d'une session entre un client dudit domaine dudit réseau et un noeud de service dudit réseau, domaine à partir duquel un utilisateur connecté audit réseau par l'intermédiaire dudit client demande un service, le programme informatique étant configuré pour réaliser un procédé selon l'une quelconque des revendications 1 à 12.
